**Europäisches Patentamt**

**European Patent Office**

**Office européen des brevets**

(11) Numéro de publication : **0 349 422 B1**

(12) **FASCICULE DE BREVET EUROPEEN**

(45) Date de publication du fascicule du brevet :
26.02.92 Bulletin 92/09

(21) Numéro de dépôt : **89401843.1**

(22) Date de dépôt : **27.06.89**

(51) Int. Cl.⁵ : **G01N 3/08**

(54) **Cellule d'essais triaxiaux de contraintes sur un échantillon de roche et methode d'essais utilisant une telle cellule.**

(30) Priorité : **30.06.88 FR 8808885**

(43) Date de publication de la demande :
**03.01.90 Bulletin 90/01**

(45) Mention de la délivrance du brevet :
**26.02.92 Bulletin 92/09**

(84) Etats contractants désignés :
**DE GB IT NL**

(56) Documents cités :
**FR-A- 1 605 003**
**US-A- 3 975 950**

(56) Documents cités :
**SOVIET INVENTIONS ILLUSTRATED, semaine 8736, 16 septembre 1987, section MING,Q49, page 17, résumé no. 87-256423/36, Derwent Publications Ltd, Londres, GB; & SU-A-1286 935**
**PATENT ABSTRACTS OF JAPAN, vol. 7, no. 164 (P-211)[1309], 19 juillet 1983, page 60 P 211; & JP-A-58 71 432**
**SOVIET INVENTIONS ILLUSTRATED, semaine K01, 16 février 1983, section Q42, page 26, résumé no. A2475, Derwent Publications, Londres, GB; & SU-A-909 008**

(73) Titulaire : **INSTITUT FRANCAIS DU PETROLE 4, Avenue de Bois Préau F-92502 Rueil-Malmaison (FR)**

(72) Inventeur : **Sarda, Jean-Paul 13 bis, rue Daniel Casanova F-92500 Rueil-Malmaison (FR)** Inventeur : **Grard, Guy 82, rue Pasteur F-95100 Argenteuil (FR)**

EP 0 349 422 B1

Jouve, 18, rue Saint-Denis, 75001 PARIS

## Description

La présente invention concerne le domaine des effets sous contraintes effectuées sur un échantillon de roche prélevé dans une formation, ces analyses permettant de comparer les propriétés et les caractéristiques de la formation. Elle s'applique tout particulièrement à une cellule d'essais triaxiaux sous contraintes sur un échantillon et à la méthode d'essais utilisant une telle cellule.

Les dispositifs actuellement utilisés pour effectuer des essais triaxiaux sur roche comportent une enceinte fermée, dans laquelle on introduit l'échantillon de roche à tester, cet échantillon étant alors soumis à deux types de contraintes, une contrainte verticale exercée par un piston sur la section supérieure de la roche et des contraintes latérales, exercées par un fluide sous pression dans l'enceinte par l'intermédiaire d'une membrane élastique imperméable.

Afin d'évaluer la déformation de l'échantillon, des jauges de contraintes sont collées sur celui-ci et sont reliées par des fils de transmission à des appareils de mesure situés à l'extérieur de l'enceinte.

Un tel dispositif d'essais triaxiaux sur échantillon est utilisé couramment dans les applications de mécanique des roches depuis de nombreuses années, mais si les résultats de ces mesures sont satisfaisants pour les analyses développées, la mise en oeuvre du dispositif est, quant à elle, plus problématique. Un tel type d'essais sur roches est notamment divulgué dans le brevet US 3 975 950.

En effet, le mode préparatoire est long et souvent inadapté. Il faut tout d'abord coller les jauges de contraintes contre l'échantillon, introduire celui-ci dans une membrane tubulaire de faible épaisseur et assurer la connexion des jauges par des fils traversant cette membrane.

Cette étape préparatoire étant réalisée, l'échantillon est placé dans l'enceinte de la cellule d'essai et est maintenu dans celle-ci par le piston en appui sur la tranche supérieure de l'échantillon. On injecte ensuite un fluide de confinement autour de la membrane jusqu'à obtenir la pression de confinement désirée. La membrane en contact avec ce fluide sous pression transmet alors à la roche des contraintes latérales.

La force progressive exercée par le piston se répercute à travers la roche sous forme de déformations croissantes détectées par les jauges, la contrainte exercée par le piston pouvant aller jusqu'à la rupture de la structure de l'échantillon.

Ce type d'installation en vue d'essais triaxiaux présente les inconvénients notoires d'une phase de montage longue et peu commode. Il n'est pas toujours simple d'effectuer une vidange de la cellule pour retirer l'échantillon fracturé, désaccoupler les connexions électriques alors que le liquide peut être encore présent sur la membrane tubulaire. De plus, les problèmes sont encore plus nombreux lorsque la roche est notablement saturée en eau, car, dans ce cas, le collage des jauges devient excessivement difficile, ainsi que le passage des fils de connexion à travers la membrane.

Enfin, un inconvénient majeur d'un tel dispositif est de détecter les déformations ponctuelles au niveau de chaque jauge de contrainte, alors qu'il est important de pouvoir détecter un déplacement global d'échantillon. Un tel déplacement global signale une anomalie plus ou moins prononcée de l'essai, et constitue la seule mesure possible dans le cas de la rupture de l'échantillon, les jauges de contraintes devenant alors inactives car ponctuelles.

L'information sur la déformation au moment de la rupture n'est plus disponible, dans le cas des jauges de contraintes, alors qu'elle joue un rôle essentiel dans l'analyse du mécanisme de rupture du matériau.

La présente invention vise donc à pallier les inconvénients des dispositifs d'essais triaxiaux classiques de l'art antérieur, en simplifiant considérablement par une structure nouvelle les opérations d'installation de l'échantillon et des dispositifs de mesure associés.

Elle permet également de mesurer conjointement les déformations ponctuelles au niveau des jauges de contraintes et les déplacements de l'échantillon introduit dans l'enceinte, sous l'effet des forces appliquées, cette mesure de déplacement étant essentielle dans le processus d'analyse au-delà de la rupture.

L'idée mère de la présente invention est d'utiliser une cellule comportant une membrane dans laquelle est introduit l'échantillon. Elle possède un volume intérieur creux, de type "chambre à air" venant exercer une pression homogène sur toute la surface de l'échantillon. Cette membrane contient une entrée d'injection de fluide qui exerce à une pression donnée les contraintes latérales sur la roche.

La présente invention a donc pour objet une cellule d'essais triaxiaux de contraintes sur échantillon de roche, comportant un corps central exerçant des contraintes latérales sur ledit échantillon ainsi qu'un moyen de pression verticale sur une section de l'échantillon, une membrane enserrant ledit échantillon, ladite cellule comportant en outre des moyens de mesure des déformations de l'échantillon liées aux contraintes qui lui sont appliquées, caractérisée en ce que ladite membrane introduite dans le corps central vient en contact sur une surface extérieure avec ledit corps et présente une ouverture longitudinale centrale dans laquelle est introduite l'échantillon, ledit échantillon étant en contact avec une surface intérieure de l'ouverture longitudinale de la membrane et ladite membrane comportant un volume intérieur creux constituant une chambre de mise en confinement par un fluide introduit par un orifice.

Par l'utilisation d'une forme appropriée de la membrane possédant un volume intérieur creux dans lequel on injecte un fluide sous pression, on s'affranchit de façon notable des problèmes de montage et de vidange existant dans les dispositifs de l'art antérieur.

Selon une caractéristique avantageuse de l'invention, les moyens de mesure des déformations comportent des organes de mesure de déplacement de l'échantillon.

Ces organes de mesure de déplacement comportent, dans un mode de réalisation préféré, au moins deux palpeurs dont chacun vient en contact à une première extrémité avec la surface de l'échantillon et à une seconde extrémité avec un capteur de déplacement, lesdits palpeurs traversant par un conduit étanche audit fluide la chambre de mise en confinement de ladite membrane.

L'utilisation de palpeurs en contact avec la surface de l'échantillon et transmettant les mouvements de déplacement à des capteurs, permet d'associer à l'analyse habituelle des jauges de contraintes, les mesures liées au déplacement latéral de l'échantillon dans son ensemble, ces mesures de déplacement étant les seules mesures disponibles après rupture de l'échantillon.

Selon un mode de réalisation particulier, le moyen de pression verticale comporte un piston cylindrique de section sensiblement inférieure à l'ouverture centrale de la membrane et percé de trous. Les jauges de contraintes sont avantageusement placées contre la surface de l'échantillon et reliées à des appareils de mesure par des fils de connexion traversant les trous ménagés dans le piston.

Le positionnement des jauges de contraintes s'effectue plus facilement par la présente invention, puisqu'il n'est plus nécessaire de faire passer les fils de connexion à travers la membrane, ceux-ci étant accolés entre la paroi interne de la membrane et l'échantillon jusqu'à sa partie supérieure, puis traversant ensuite le piston pour être reliés à des appareils de mesure extérieurs à l'enceinte.

Ainsi, par la présente invention, on s'affranchit des difficultés de connexion des jauges de contrainte à travers la membrane.

Dans un mode de réalisation préféré de l'invention, les capteurs de déplacements reposent sur des étriers montés sur la surface extérieure du corps de la cellule.

Avantageusement, la membrane selon l'invention repose dans le corps de la cellule sur une embase dont au moins une partie s'engage dans l'ouverture centrale en assurant une étanchéité circonférentiellement.

Selon une caractéristique particulière de l'invention, les organes de mesure de déplacement sont situés dans un même plan horizontal, sensiblement au milieu de l'échantillon selon sa direction longitudinale.

La présente invention englobe également une méthode d'essais triaxiaux de contraintes sur un échantillon de roche utilisant une cellule telle que précédemment décrite, dans laquelle :
– on introduit une membrane dans le corps de la cellule, de manière à ce que les parois de ladite membrane viennent en appui contre ledit corps,
– on place un échantillon à tester au centre de ladite membrane, de manière à ce que les parois de l'échantillon soient en contact avec ladite membrane,
– on injecte dans la chambre de confinement un fluide pour exercer une pression de confinement latérale homogène sur toute la surface de l'échantillon,
– on règle les capteurs de déplacement montés sur les étriers à une position de zéro,
– on exerce une pression verticale par l'action du piston, et
– on mesure le déplacement dudit échantillon par les capteurs.

La méthode d'essais triaxiaux selon la présente invention simplifie considérablement la phase préparatoire à la mesure notamment, quant à la mise en place des contraintes latérales.

On décrira maintenant plus en détail une forme de réalisation particulière de l'invention qui en fera mieux comprendre les caractéristiques essentielles et les avantages, étant entendu toutefois que cette forme de réalisation est choisie à titre d'exemple. Sa description est illustrée par les dessins annexés dans lesquels :
– la figure 1 présente une cellule d'essais triaxiaux selon la présente invention en coupe verticale, et
– la figure 2 présente la cellule selon une coupe horizontale au niveau des capteurs de déplacement.

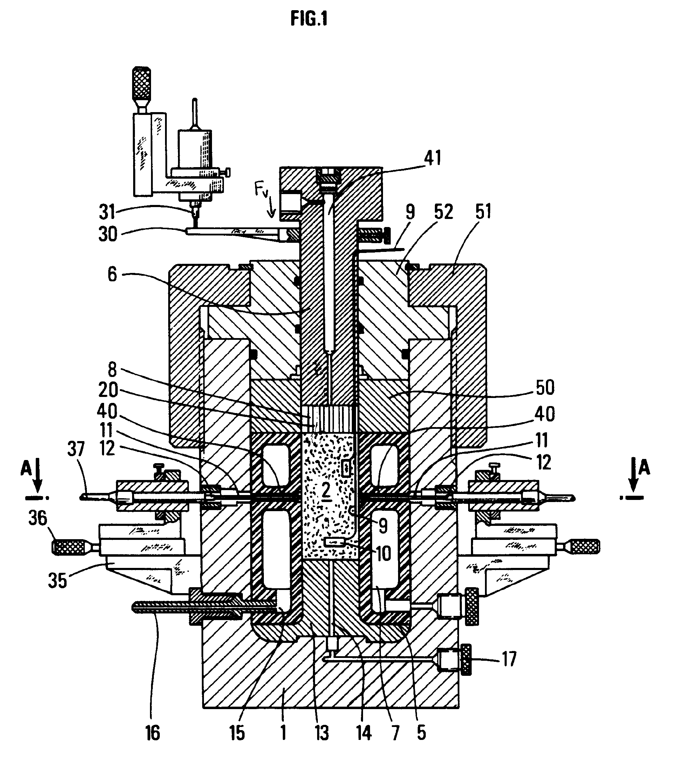

La figure 1 présente une cellule d'essais triaxiaux de contraintes sur un échantillon de roche 2.

Cette cellule comporte un corps 1 de forme généralement cylindrique (éventuellement de section carrée ou rectangulaire sans pour autant modifier du cadre de la présente invention) dont la partie centrale constitue l'enceinte d'essais triaxiaux sur échantillon.

Au fond de l'enceinte interne du corps 1 de la cellule est ménagée une embase 13 sur laquelle repose une membrane 5 chargée d'exercer des pressions latérales sur l'échantillon à tester.

Cette membrane 5 présente une ouverture longitudinale centrale dans laquelle est introduit l'échantillon 2. Sa surface extérieure vient en appui contre la surface interne du corps 1 de la cellule. Dans un type de réalisation préféré, l'ouverture centrale sera de forme cylindrique et la section extérieure de la membrane sera circulaire.

On peut cependant aisément transformer la forme de la membrane sans pour autant modifier les caractéristiques de l'invention dans le cas où l'échantillon prélevé n'est pas sous la forme d'une carotte cylindrique et où l'enceinte du corps de la cellule n'est plus de section circulaire.

La membrane 5 vient en appui sur toute sa surface externe contre le corps de la cellule 1, et au niveau de sa partie inférieure sur l'embase 13. La forme de l'embase 13 est étudiée de manière à ce qu'une partie s'engage dans l'ouverture centrale de la membrane 5 pour, d'une part, permettre un positionnement stable de ladite membrane au fond de l'enceinte en supprimant tout débattement latéral et, d'autre part, assurer une étanchéité circonférentielle optimale au niveau de la surface de support de l'échantillon.

La membrane 5 comporte un volume interne creux 7 lui donnant une configuration de type "chambre à air". Ce volume interne 7 est rempli d'un fluide de confinement injecté par un orifice d'introduction 15, afin de constituer une chambre de mise en confinement dont la pression augmentera par l'injection de fluide et qui exercera alors des contraintes latérales croissantes, sur l'échantillon.

L'orifice d'introduction 15 est réalisé sur la partie basse de la membrane 5 et est mis en relation avec un conduit d'entrée 16 traversant le corps 1 et relié à des moyens d'injection habituellement utilisés (non représentés).

La pression d'injection du fluide par le conduit 16 est de l'ordre de 100 bar, mais des essais concluants ont permis d'utiliser un tel dispositif jusqu'à des pressions de l'ordre de 450 bar.

La membrane sera réalisée dans un matériau élastique relativement rigide, tel que le butyle et le fluide utilisé dans la chambre de confinement pourra être de l'eau, de l'huile, voire du mercure.

L'échantillon 2 introduit dans la partie centrale de la membrane aura été prélevé dans la formation de manière à avoir un diamètre légèrement inférieur au diamètre de cette partie centrale pour faciliter son introduction. Lorsque la pression dans la chambre 7 augmentera par l'introduction de fluide, la membrane se déformera légèrement et assurera alors un contact sur l'échantillon de manière à exercer une pression homogène sur toute sa surface.

L'échantillon 2 placé dans la cellule est soumis à deux types de contraintes : une première contrainte verticale exercée par un moyen de pression du type piston et des contraintes latérales mises en oeuvre par la mise sous pression de la chambre de confinement. Ces contraintes transmettent à l'échantillon des déformations dont on désire mesurer les variations.

Deux moyens seront mis en oeuvre pour mesurer ces déformations : des jauges de contraintes habituellement utilisées dans ce domaine et des organes de mesure de déplacement.

Dans un mode de réalisation préféré, la cellule d'essais triaxiaux comporte un moyen de pression verticale constitué par un piston 6. Ce piston 6 est de forme cylindrique et de section légèrement inférieure à l'ouverture centrale de la membrane pour pouvoir exercer une force de pression verticale sur l'échantillon.

Le piston 6 comporte sur sa partie basse une pièce d'appui 8 qui assure un contact permanent avec l'échantillon. Cette pièce d'appui 8 est percée de trous 20 qui débouchent dans un volume creux du corps du piston 6.

Ces trous 20 permettent l'évacuation vers le corps du piston de l'eau éventuellement présente dans l'échantillon, lorsqu'une pression est exercée.

La force de pression verticale, représentée sur la figure 1 par une flèche de référence $F_V$, peut être exercée par tous moyens de pression habituels dans le domaine considéré, auxquels on associe généralement des tensiomètres pour mesurer la pression considérée.

Par la présente invention, on propose de mesurer, en outre, par un capteur de déplacement 31 coopérant avec un plateau 30 solidarisé au corps du piston, les variations du déplacement vertical transmis par l'échantillon.

La cellule d'essais triaxiaux comporte deux autres types de moyens de mesure des déformations. Tout d'abord, des jauges de contraintes 10 utilisées habituellement dans les dispositifs de l'art antérieur. Ces jauges de contraintes sont collées à l'échantillon avant d'être introduites dans la cellule. On utilise généralement quatre jauges, deux placées dans une direction verticale, les deux autres suivant une direction horizontale.

Après introduction de l'échantillon dans la membrane, les fils de connexion 9 reliés à ces jauges 10 sont guidés vers l'extérieur de la cellule en traversant la pièce d'appui 8 du piston au niveau des trous 20. Ces trous assurent donc à la fois les fonctions d'évacuer l'eau en suspens et de permettre le passage des fils de connexion vers l'extérieur de la membrane.

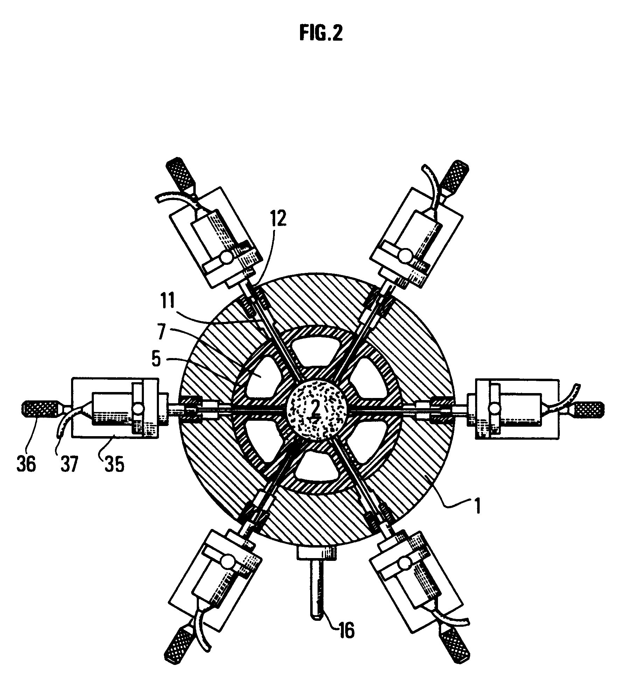

Le deuxième moyen de mesure des déformations exercées sur l'échantillon est constitué par des organes de mesure des déplacements latéraux de l'échantillon. Ceux-ci sont clairement visibles sur la figure 2, à laquelle on se reportera, en association à la figure 1, pour la description qui suit.

La mesure de déplacement latéral de l'échantillon, c'est-à-dire l'augmentation de son diamètre sous l'effet de la pression exercée (phénomène appelé généralement effet de fût) est effectuée par l'intermédiaire de palpeurs 11 qui transmettent la compression de l'échantillon à des capteurs de déplacement 12.

La figure 2 fait apparaitre l'utilisation de six capteurs de déplacement disposés régulièrement autour de la membrane. On comprendra aisément que la présente invention s'appliquera également dans le cas où l'on utiliserait seulement 4 capteurs.

Dans un type de réalisation préféré, ces capteurs sont situés dans un même plan horizontal sensiblement au milieu de l'échantillon 2 dans sa direction longitudinale.

Les palpeurs 11 sont constitués par des tiges fines en contact à une de leurs extrémités avec la surface de l'échantillon 2 et à leur autre extrémité en contact avec les capteurs de déplacement 12.

Ces palpeurs traversent la membrane 5, notamment au niveau de sa chambre de confinement 7 par un conduit interne 40 étanche au fluide d'injection. Ces conduits 40 permettent aux palpeurs de venir en contact avec l'échantillon, tout en maintenant fermée la chambre de confinement.

Les capteurs de déplacement 12 sont engagés dans des ouvertures réalisées dans le corps de la cellule.

Ils reposent sur des étriers 35 fixés sur la paroi du corps de la cellule. Ces capteurs comportent des moyens de réglage 36, tels que des vis micrométriques qui permettent de les déplacer légèrement sur les étriers et de venir les positionner en un point constituant une référence 0 de la mesure.

Ces capteurs peuvent être notamment constitués de tubes télescopiques munis de moyens de rappel en extension dont on mesure le déplacement les uns par rapport aux autres pour en déduire la distance parcourue.

On relie les capteurs à des moyens centraux d'analyse (non représentés) par des câbles 37.

Le déplacement global d'échantillon mesuré par de tels moyens permet d'analyser des informations qui n'étaient pas disponibles par les mesures de jauges de contraintes. Un tel déplacement global de l'échantillon permet également de détecter une anomalie plus ou moins prononcée de l'essai, telle que par exemple le défaut de parallélisme des embases de chargement, le défaut de centrage de la charge ou du parallélisme des sections de l'échantillon, l'hétérogénéïté des propriétés de déformation du matériau...

La mesure de déplacement par les capteurs 12 joue un rôle essentiel dans le cas de rupture de l'échantillon, car souvent les jauges de contraintes ne sont plus alors exploitables, bien que l'information de déformation dans cette phase joue un rôle essentiel dans l'analyse du mécanisme de rupture de matériau.

Afin de permettre la meilleure analyse possible, les capteurs 12 associés aux palpeurs 11 sont disposés dans un plan horizontal au niveau de la membrane sensiblement proche du centre de la longueur de l'échantillon lorsque celui-ci est introduit dans la cellule.

Des essais sur échantillon poreux saturé en eau étant particulièrement intéressants, la cellule comporte en outre une entrée 41 de liquide traversant le piston et injectant de l'eau dans l'échantillon. Lorsque l'eau a diffusé entièrement dans la roche et que celle-ci est saturée, l'eau s'écoule par une canalisation 14 réalisée dans l'embase 13 pour être évacuée vers l'extérieur de la cellule par une sortie 17.

La cellule comporte également une pièce de blocage 50 placée au dessus de la membrane qui guide le piston en translation lors de sa mise en place. Des moyens de fermeture de l'enceinte 51, 52 sont réalisés sous la forme d'une pièce vissée au corps 1.

Le mode d'utilisation d'une telle cellule est considérablement simplifié par rapport aux dispositifs de l'art antérieur.

Les moyens de fermeture de l'enceinte étant retirés et la pression de confinement à l'intérieur de la membrane étant nulle, on introduit l'échantillon au centre de cette membrane, puis on vient positionner le piston sur la surface supérieure de l'ensemble.

On établit ensuite dans la chambre de la membrane la pression de confinement voulue.

On règle le zéro des capteurs de déplacements par les vis micrométriques au niveau de chaque étrier.

On exerce par l'intermédiaire du piston une force de pression verticale et on enregistre les déformations obtenues par les jauges de contraintes et les capteurs de déplacement.

La présente invention s'affranchit des dispositifs antérieurs, notamment par la suppression de la vidange entre chaque mesure et permet d'obtenir des informations sur l'échantillon qui n'étaient pas disponibles après rupture de la roche.

Naturellement, l'invention n'est en rien limitée par les particularités qui ont été spécifiées dans ce qui précède, ou par les détails du mode de réalisation particulier choisi pour illustrer l'invention.

Toutes sortes de variantes peuvent être apportées à la réalisation particulière qui a été décrite à titre d'exemple et à ses éléments constitutifs, sans sortir pour autant du cadre de l'invention.

Cette dernière englobe ainsi tous les moyens constituant des équivalents techniques des moyens décrits, ainsi que leurs combinaisons.

## Revendications

1. Cellule d'essais triaxiaux de contraintes sur échantillon de roche, comportant un corps central (1) exerçant des contraintes latérales sur ledit échantillon (2) ainsi qu'un moyen de pression verticale (6) sur une section de l'échantillon, une membrane enserrant ledit échantillon, ladite cellule comportant en outre des moyens de mesure des déformations (10, 11, 12) de l'échantillon liées aux contraintes qui lui sont appliquées, caractérisée en ce que ladite membrane (5) introduite dans le corps central (1) vient en contact sur une surface extérieure avec ledit corps et présente une ouverture longitudinale centrale dans laquelle est introduite l'échantillon (2), ledit échantillon étant en contact avec une surface intérieure de l'ouverture longitudinale de la membrane et ladite membrane comportant un volume intérieur creux (7) constituant une chambre de mise en confinement par un fluide introduit par un orifice (15).

2. Cellule d'essais triaxiaux selon la revendication 1, caractérisée en ce que les moyens de mesure de déformations comportent des organes de mesure (11, 12) de déplacement de l'échantillon (2).

3. Cellule d'essais triaxiaux selon la revendication 2, caractérisée en ce que lesdits organes de mesure de déplacement comportent au moins deux palpeurs (11), chacun desdits palpeurs (11) venant en contact à une première extrémité avec la surface de l'échantillon (2) et à une seconde extrémité avec un capteur de déplacement (12), lesdits palpeurs traversant par un conduit étanche (40) audit fluide la chambre (7) de mise en confinement de ladite membrane (5).

4. Cellule d'essais triaxiaux selon l'une quelconque des revendications 1 à 3, caractérisée en ce que le moyen de pression verticale comporte un piston (6) cylindrique de section sensiblement inférieure à l'ouverture centrale de la membrane dont la surface d'appui (8) sur l'échantillon est percée de trous (20).

5. Cellule d'essais triaxiaux selon l'une quelconque des revendications 2 à 4, caractérisée en ce que les moyens de mesure comportent en outre des jauges de contraintes (10) placées contre la surface de l'échantillon (2) et reliées à des appareils de mesure par des fils de connexion (9) traversant les trous (20) ménagés dans le piston (6).

6. Cellule d'essais triaxiaux selon l'une quelconque des revendications 3 à 5, caractérisée en ce que les capteurs de déplacement reposent sur des étriers (35) montés sur la surface extérieure du corps (1) de la cellule.

7. Cellule d'essais triaxiaux selon l'une quelconque des revendications 2 à 6, caractérisée en ce que la membrane (5) repose dans le corps (1) de la cellule sur une embase (13) dont au moins une partie s'engage dans l'ouverture centrale en assurant une étanchéité circonférentiellement.

8. Cellule d'essais triaxiaux selon l'une quelconque des revendications 2 à 7, caractérisée en ce que les organes de mesure de déplacement (11, 12) sont situés dans un même plan horizontal, sensiblement au milieu de l'échantillon (2) dans sa direction longitudinale.

9. Méthode d'essais triaxiaux de contraintes sur un échantillon de roche utilisant une cellule selon l'une quelconque des revendications 1 à 7, caractérisée en ce que :

– on introduit une membrane (5) dans le corps de la cellule, de manière à ce que les parois de ladite membrane viennent en appui contre ledit corps (1),

– on place un échantillon (2) à tester au centre de ladite membrane (5), de manière à ce que les parois de l'échantillon soient en contact avec ladite membrane,

– on injecte dans la chambre de confinement (7) un fluide pour exercer une pression de confinement latérale homogène sur toute la surface de l'échantillon,

– on règle les capteurs de déplacement (12) montés sur les étriers à une position de zéro,

– on exerce une pression verticale par l'action du piston (6), et

– on mesure le déplacement dudit échantillon par les capteurs (12).

10. Méthode d'essais triaxiaux selon la revendication 9, caractérisée en ce que préalablement à l'introduction de la membrane, on fixe des jauges de contraintes (10) contre l'échantillon et on fait passer les fils de connexion (9) par les trous (20) ménagés dans le piston (6).

## Patentansprüche

1. Dreiaxiale Zelle für Testbelastungen an Gesteinsproben, umfassend ein mittiges Gehäuse (1), welches seitliche Beanspruchungen auf diese Probe (2) ausübt sowie ein Mittel zur Ausübung vertikalen Drucks (6) auf einen Querschnitt des Probekörpers, wobei eine Membran diesen Probekörper eng einschließt und diese Zelle im übrigen Mittel zum Messen der Deformationen (10, 11, 12) des Probekörpers, welche mit den auf ihn ausgeübten Belastungen verknüpft sind, umfaßt, dadurch gekennzeichnet, daß diese in das mittige Gehäuse (1) eingeführte Membran (5) auf einer Außenfläche in Kontakt mit diesem Körper kommt und eine mittige Längsöffnung aufweist, in die der Probekörper (2) eingeführt wird, wobei dieser Probekörper in Kontakt mit einer Innenfläche der Längsöffnung der Membran steht und diese Membran ein hohles Innenvolumen (7) umfaßt, das eine Kammer zur Unterdrucksetzung durch ein über eine Öffnung (15) eingeführtes Fluid bildet.

2. Dreiaxiale Zelle nach Anspruch 1, dadurch gekennzeichnet, daß die Mittel zum Messen von Deformationen Meßorgane (11, 12) für die Bewegung oder die Verschiebung der Probe (2) umfassen.

3. Dreiaxiale Zelle nach Anspruch 2, dadurch gekennzeichnet, daß diese Bewegungsmeßorgane wenigstens zwei Taster (11) umfassen, wobei jeder dieser Taster (11) in Kontakt an einem ersten Ende mit der Oberfläche des Probekörpers (2) und an einem zweiten Ende mit einem Bewegungsaufnehmer (12) kommt, wobei diese Taster über eine fluiddichte Leitung (40) die Kammer (7) zur Druckbeaufschlagung der Membran (5) durchsetzen.

4. Dreiaxiale Zelle nach einem der Ansprüche 1 bis 3, dadurch gekennzeichnet, daß das vertikale Druckmittel einen zylindrischen Kolben (6) von einem Querschnitt umfaßt, der im wesentlichen kleiner als die mittige Öffnung der Membran ist, deren sich auf dem Probekörper abstützende Fläche (8) von Löchern (20) durchbohrt ist.

5. Dreiaxiale Zelle nach einem der Ansprüche 2 bis 4, dadurch gekennzeichnet, daß die Meßeinrichtungen im übrigen Dehnungsmeßstreifen (10) umfassen, die gegen die Oberfläche der Probe (2) angeordnet und mit Meßgeräten vermittels Verbindungsdrähten (9) verbunden sind, welche die im Kolben (6) ausgesparten Löcher (20) durchsetzen.

6. Dreiaxiale Zelle nach einem der Ansprüche 3 bis 5, dadurch gekennzeichnet, daß die Bewegungsaufnehmer auf Konsolen (35) ruhen, die auf der Außenfläche des Gehäuses (1) der Zelle montiert sind.

7. Dreiaxiale Zelle nach einem der Ansprüche 2 bis 6, dadurch gekennzeichnet, daß die Membran (5) im Gehäuse (1) der Zelle auf einem Sockelstück (13) ruht, von dem wenigstens ein Teil in die mittige Öffnung eingreift und für eine Umfangsabdichtung sorgt.

8. Dreiaxiale Zelle nach einem der Ansprüche 2 bis 7, dadurch gekennzeichnet, daß die Bewegungsmeßorgane (11, 12) in ein und der gleichen Horizontalebene im wesentlilchen in der Mitte des Probekörpers (2) in seiner Längsrichtung gesehen, angeordnet sind.

9. Dreiaxiales Belastungsverfahren an einer Gesteinsprobe unter Verwendung einer Zelle nach einem der Ansprüche 1 bis 7, dadurch gekennzeichnet, daß:
– man eine Membran (5) in das Gehäuse der Zelle derart einführt, daß die Wandungen dieser Membran in Abstützung gegen dieses Gehäuse (1) kommen,
– man einen zu untersuchenden Probekörper (2) in der Mitte dieser Membran (5) derart anordnet, daß die Wandungen des Probekörpers in Kontakt mit dieser Membran stehen,
– man in die Druck- oder Begrenzungskammer (7) ein Fluid einspritzt, um einen seitlichen homogenen Begrenzungsdruck auf die gesamte Oberfläche des Probekörpers auszuüben,
– man die auf den Konsolen gelagerten Bewegungsaufnehmer (12) auf eine Stellung null regelt,
– man einen vertikalen Druck durch Wirkung des Kolbens (6) ausübt und
– man die Bewegung der Verschiebung des Probekörpers durch die Aufnehmer (12) mißt.

10. Dreiaxiales Belastungsverfahren nach Anspruch 9, dadurch gekennzeichnet, daß man vor dem Einführen der Membran Dehnungsmeßstreifen (10) gegen den Probekörper befestigt und die Verbindungsdrähte (9) durch die im Kolben (6) ausgesparten Löcher (20) führt.

## Claims

1. A cell for triaxial stress testing of a rock sample, comprising a central body (1) applying lateral stress to the sample (2) as well as a means of applying vertical pressure (6) to a section of the sample, with a membrane enclosing the sample, wherein the cell further comprises means for measuring deformations (10, 11, 12) of the sample related to the stress applied to it, characterised in that an external surface of the membrane (5) introduced into the central body (1) makes contact with the body and forms a central longitudinal opening into which the sample (2) is introduced, the sample being in contact with an internal surface of the longitudinal opening of the membrane and the membrane comprising an internal hollow volume (7) forming a chamber for confinement by means of a fluid introduced through an orifice (15).

2. A triaxial testing cell in accordance with claim 1, characterised in that the deformation measuring means comprise means for measuring (11, 12) displacement of the sample (2).

3. A triaxial testing cell in accordance with claim 2, characterised in that the displacement measuring means comprise at least two rods (11), each of the rods (11) making contact at a first end with the surface of the sample (2) and at a second end with a displacement sensor (12), the rods passing by means of an impervious conduit (40) to the fluid in the confinement chamber (7) of the membrane (5).

4. A triaxial testing cell in accordance with one of claims 1 to 3, characterised in that the means for applying vertical pressure comprises a piston (6) of cylindrical section substantially less than the central opening of the membrane whose support surface (8) on the sample is pierced with holes (20).

5. A triaxial testing cell in accordance with one of claims 2 to 4, characterised in that the measuring means further comprise stress gauges (10) located against the surface of the sample (2) and connected to the measuring apparatus by means of connecting wires (9) passing through the holes (20) in the piston.

6. A triaxial testing cell in accordance with one of claims 3, to 5, characterised in that the displacement sensors rest on stirrups (35) mounted on the external surface of the body (1) of the cell.

7. A triaxial testing cell in accordance with one of claims 2 to 6, characterised in that the membrane (5) rests in the body (1) of the cell on a base (13) at least a part of which engages with the central opening, thus ensuring sealing around the circumference.

8. A triaxial testing cell in accordance with one of claims 2 to 7, characterised in that the displacement measuring means (11, 12) are located on a same horizontal plane substantially in the middle of the sample (2) along its longitudinal direction.

9. A method for triaxial stress testing on a rock sample using a cell in accordance with one of claims 1 to 7, characterised in that:
– a membrane (5) is introduced into the body of the cell in such a way that the walls of the membrane bear against the body (1), :

– a sample (2) to be tested is placed at the centre of the membrane (5) in such a way that the walls of the sample make contact with the membrane,
– a fluid is injected into the confinement chamber (7) in order to apply homogeneous lateral confinement pressure to the whole surface of the sample,
– the displacement sensors (12) mounted on the stirrups are set to a zero position,
– a vertical pressure is applied by the action of piston (6), and
– the displacement of the sample is measured by the sensors (12).

10. A method for triaxial stress testing in accordance with claim 9, characterised in that prior to the introduction of the membrane, stress gauges (10) are fixed to the sample and the connecting wires (9) are passed through holes (20) set in the piston.

FIG.1

# FIG.2